# EUROPÄISCHE PATENTSCHRIFT

(11) **EP 4 136 826 B1**
(45) Veröffentlichungstag und Bekanntmachung des Hinweises auf die Patenterteilung: **13.03.2024**
(21) Anmeldenummer: 21725427.5
(22) Anmeldetag: 03.05.2021
(51) Int. Cl.: H04L 12/40, G05B 19/4065, H04L 43/022

(54) **VERFAHREN ZUR DATENKOMMUNIKATION**
METHOD FOR DATA COMMUNICATION
PROCÉDÉ DE COMMUNICATION DES DONNÉES

(30) Priorität: 06.07.2020 EP 20184251
(43) Veröffentlichungstag der Anmeldung: 22.02.2023
(73) Patentinhaber: Siemens Aktiengesellschaft, 80333 München (DE)
(72) Erfinder: HEINEMANN, Gerhard, 91058 Erlangen (DE)
(74) Vertreter: Siemens Patent Attorneys
(86) Internationale Anmeldenummer: PCT/EP2021/061498
(87) Internationale Veröffentlichungsnummer: WO 2022/008115

(56) Entgegenhaltungen:
- DE-A1- 10 152 765
- DE-A1-102009 024 101
- US-A1- 2015 281 355

## Beschreibung

Die Erfindung betrifft ein Verfahren zur Datenkommunikation zwischen einer Steuereinheit und einem Antriebssystem sowie ein System zur Durchführung des Verfahrens.

DE 101 52 765 A1 offenbart hierzu: Mit dieser Erfindung wird Expertenwissen von Maschinenherstellern jederzeit schnell via Internet an eine Maschine gebracht, indem ein Hauptrechner zur Erzeugung und Bereitstellung von maschinenbezogenen Daten und/oder Diensten vorgesehen ist und ein maschinenseitiger Arbeitsrechner, welcher mit dem Hauptrechner über eine Datenkommunikationsverbindung verbunden ist und durch den in Echtzeit Maschinenzustandsdaten erfassbar sind, an den Hauptrechner übertragbar sind und vom Hauptrechner mittels einer Analyse- und Auswerteeinheit in Abhängigkeit solcher Maschinenzustandsdaten generierte maschinenbezogene Daten und/oder Dienste empfangbar sind.

Die in DE 10 2009 024101 A1 vorliegende Erfindung betrifft ein Verfahren zum Auswerten von Zustandsdaten einer Werkzeugmaschine, wobei das Verfahren einen ersten Schritt des Bereitstellens der Zustandsdaten durch einen Aktionsrekorder in der Werkzeugmaschine aufweist, wobei die Zustandsdaten in Echtzeit bereitgestellte Steuerungsbefehle oder Ereignisse repräsentieren, wobei die Ereignisse eine Reaktion auf die Steuerungsbefehle in der Werkzeugmaschine repräsentieren. Ferner weist das Verfahren einen Schritt des Übertragens und Speicherns der Zustandsdaten aus dem Aktionsrekorder in einen Logbuch-Speicher einer von dem Aktionsrekorder unabhängigen Datenverarbeitungseinheit auf. Auch weist das Verfahren einen Schritt des Abrufens und Auswertens der in dem Logbuch-Speicher gespeicherten Zustandsdaten von einer Überwachungseinheit auf, die in einer räumlich entfernten Position von der Datenverarbeitungseinheit angeordnet ist, wobei die Überwachungseinheit ausgebildet ist, um Zustandsdaten von unterschiedlichen Werkzeugmaschinen aus einer Mehrzahl von Logbuch-Speichern abzurufen und auszuwerten.

Um ungeplante Stillstände von Maschinen, Antrieben und Anlagen zu vermeiden, ist es wichtig, Probleme frühzeitig zu erkennen. Hierzu werden Messdaten herangezogen wie beispielsweise Drehmoment, Drehzahl, Ströme und Temperaturen.

Eine Ermittlung der Messdaten gelingt oftmals durch einen Funktionsgenerator. Dieser generiert ein reproduzierbares Soll-Wert-Signal. Anschließend werden Ist-Werte, als Reaktion auf das Soll-Wert-Signal, aufgezeichnet. Dieses Verfahren kann jedoch nicht im laufenden Anlagenbetrieb genutzt werden, sondern ausschließlich in einem Testbetriebsmodus.

Der Erfindung liegt die Aufgabe zugrunde, Messdaten aus dem laufenden Anlagenbetrieb zu erhalten.

Die Lösung der Aufgabe gelingt durch Anspruch 1, d. h. ein Verfahren zur Datenkommunikation zwischen einer Steuereinheit und einem Antriebssystem, wobei die Steuereinheit und das Antriebssystem, vorzugsweise über einen Bus, derart miteinander verbunden sind, dass mittels eines Telegramms Daten übertragen werden, wobei das Telegramm wenigstens eine Anweisung umfasst, vorzugsweise eine Mehrzahl an Anweisungen, wobei das Telegramm wenigstens eine Anweisung zur Aufzeichnung umfasst, wobei durch die Anweisung zur Aufzeichnung eine Aufzeichnung von wenigstens einem Ist-Wert, vorzugsweise von einer Mehrzahl an Ist-Werten, und/oder einer Ist-Wert-Abfolge, vorzugsweise einer Mehrzahl an Ist-Wert-Abfolgen, des Antriebssystems veranlasst wird.

Die Erfindung eignet sich besonders gut für Werkzeugmaschinen. Jedoch sind auch andere Anwendungen denkbar.

Das Antriebssystem umfasst vorzugsweise einen Umrichter und eine dynamoelektrische Maschine, insbesondere einen Motor.

In einer vorteilhaften Ausführung wird das Telegramm zu vorbestimmten oder vorbestimmbaren Zeitpunkten abgesetzt.

Das Telegramm kann zyklisch abgesetzt werden. Es sind jedoch auch andere Zeitpunkte möglich.

In einer vorteilhaften Ausführungsform ist die Anweisung ein Steuerwort.

Das Telegramm weist vorteilhaft eine Länge von zwei Byte auf. Ein Steuerwort belegt beispielsweise drei Bit. Es sind jedoch auch andere Telegrammlängen und Bitbelegungen denkbar.

In einer vorteilhaften Ausführung weist das Telegramm eine Anweisung zum Verhalten des Antriebssystems auf.

Die Anweisung zum Verhalten des Antriebssystems kann beispielsweise einen Arbeitszyklus auslösen. Des gelingt beispielsweise durch eine Anweisung zum Start des Antriebssystems und/oder durch eine Vorgabe eines Drehzahlsollwerts.

Ein Arbeitszyklus ist z. B. ein Anfahrvorgang der Maschine oder ein Konstante-Drehzahl-Vorgang. Der gewünschte Arbeitszyklus kann z. B. in einem Teileprogramm angegeben werden.

An einem Beispiel erklärt bedeutet dies: Die Steuereinheit sendet, vorzugsweise mittels PROFIdrive, ein Telegramm an das Antriebssystem, wobei das Telegramm drei Steuerworte umfasst. Ein erstes Steuerwort signalisiert dem Antriebssystem, dass es anlaufen soll, ein zweites Steuerwort gibt eine Drehzahl vor. Ein drittes Steuerwort veranlasst das Antriebssystem zur Aufzeichnung von Messwerten. Als Messwerte eignen sich Ist-Werte sowie Ist-Wert-Abfolgen von Strom, Spannung, Temperatur, Drehmoment, Drehzahl, etc. Es handelt sich folglich vorteilhaft um einen momentan gemessenen Wert einer physikalischen Größe.

Es ist besonders vorteilhaft, wenn die Anweisung zur Aufzeichnung und die Anweisung zum Verhalten des Antriebssystems in einem Telegramm übermittelt werden, da dadurch eine Messung bzw. Aufzeichnung von Messwerten beginnt, wenn auch der Vorgang des Antriebssystems beginnt. Die Anweisung zur Aufzeichnung ist somit ein zusätzliches Steuerwort im Telegramm.

Die Anweisung zur Aufzeichnung umfasst einen Identifikator.

Durch den Identifikator wird eine Aufzeichnung wenigstens eines definierten Ist-Werts aus einer Mehrzahl an Ist-Werten und/oder eine Aufzeichnung wenigstens einer definierten Ist-Wert-Abfolge aus einer Mehrzahl an Ist-Wert-Abfolgen veranlasst.

Der Identifikator (kurz: ID) ist ein mit einem Messwert bzw. mehreren Messwerten verknüpftes Merkmal zur eindeutigen Identifizierung. Der Identifikator ist vorzugsweise eine Identifikationsnummer.

In einer vorteilhaften Ausführung wird durch den Identifikator eine definierte Abtastrate der Aufzeichnung aus einer Mehrzahl an Abtastraten und/oder eine definierte Aufzeichnungsdauer aus einer Mehrzahl an Aufzeichnungsdauern veranlasst.

Am Beispiel von oben erklärt bedeutet dies: Der Identifikator signalisiert bestimmte Werte, die gemessen werden sollen. Dies ist im Antrieb vorteilhaft hinterlegt und kann auch geändert werden. Beispielsweise bedeutet ID=0, dass die Drehzahl und eine Temperatur gemessen werden sollen. Zudem zeigt der Identifikator an, wie lange die Messwerte aufgezeichnet werden sollen sowie mit welcher Abtastrate. Die ID dient vorzugsweise als Trigger, sodass der Antrieb eine Messreihe startet. Eine Parametrierung, also eine Zuordnung aufzuzeichnender Werte zu einer ID, kann z. B. bei einer Inbetriebnahme des Antriebssystems erfolgen.

In einer weiteren vorteilhaften Ausführung wird dem Identifikator, vorzugsweise ferngesteuert, insbesondere mittels Cloud-Computing, im laufenden Betrieb des Antriebssystems der definierte Ist-Wert und/oder die definierte Ist-Wert-Abfolge zugeordnet.

Es handelt sich hierbei um den für die Aufzeichnung definierten Ist-Wert und/oder die für die Aufzeichnung definierte Ist-Wert-Abfolge.

In einer weiteren vorteilhaften Ausführung wird dem Identifikator, vorzugsweise ferngesteuert, insbesondere mittels Cloud-Computing, im laufenden Betrieb des Antriebssystems die definierte Abtastrate und/oder die definierte Aufzeichnungsdauer zugeordnet.

Eine Parametrierung, also eine Zuordnung aufzuzeichnender Werte zu einer ID, kann auch nach der Inbetriebnahme erfolgen. Zudem gelingt dies besonders vorteilhaft ferngesteuert, insbesondere mittels Cloud-Computing.

Dies ist hilfreich, wenn interessante Messwerte bei der Inbetriebnahme noch nicht bekannt sind und sich erst aus Erfahrungswerten während des operativen Betriebs der Anlage ergeben.

Zudem können auch die Abtastrate und/oder die Aufzeichnungsdauer auf diese Weise geändert werden.

Dies hat den Vorteil, dass eine Messung im operativen Anlagenbetrieb stattfinden kann. Es ist nicht nötig, die Anlage zu stoppen und die Messung in einem Testbetriebsmodus zu tätigen.

In einer vorteilhaften Ausführung wird nach Aufzeichnung des Ist-Werts ein aufgezeichneter Ist-Wert und/oder nach Aufzeichnung der Ist-Wert-Abfolge eine aufgezeichnete Ist-Wert-Abfolge, insbesondere mittels Cloud-Computing, abgespeichert.

In einer vorteilhaften Ausführung wird der Identifikator, insbesondere mittels Cloud-Computing, abgespeichert.

Die aufgezeichneten Werte sind somit eindeutig dem Identifikator in einer Speichereinheit zugeordnet. Die Speichereinheit ist vorzugsweise eine Cloud-Speichereinheit.

In einer weiteren vorteilhaften Ausführung wird der aufgezeichnete Ist-Wert und/oder die aufgezeichnete Ist-Wert-Abfolge mit einem weiteren aufgezeichneten Ist-Wert einer weiteren Aufzeichnung und/oder einer weiteren aufgezeichneten Ist-Wert-Abfolge der weiteren Aufzeichnung verglichen.

Dies bietet den Vorteil, dass Werte aus einem realen Anlagenbetrieb aufgezeichnet können. Durch die Abspeicherung des zugehörigen Identifikators können Prozesse, insbesondere wiederkehrende Prozesse, verglichen werden. Beispielsweise können Werte, die unmittelbar nach einer umfassenden Wartung erfasst wurden mit Werten verglichen werden, die nach vorbestimmten Betriebsstundenintervallen, beispielsweise 1000 Betriebsstunden, erfasst wurden. Somit können Rückschlüsse darauf gezogen werden, ob Wartungsarbeiten notwendig sind.

Zudem kann so auch eine Genauigkeit einer angetriebenen Werkzeugmaschine erfasst und bewertet werden.

Die Lösung der oben gestellten Aufgabe gelingt zudem durch Anspruch 13, d. h. ein System zur Durchführung eines derartigen Verfahrens, aufweisend:
- eine Steuereinheit und
- ein Antriebssystem, wobei die Steuereinheit und das Antriebssystem über ein System zur Datenübertragung, vorzugsweise über einen Bus, miteinander verbunden sind.

Das System wird in der Beschreibung der Figuren erläutert.

Im Folgenden wird die Erfindung anhand der in den Figuren gezeigten Ausführungsbeispiele näher beschrieben und erläutert. Es zeigen:
- FIG 1: ein System, aufweisend eine Steuereinheit und ein Antriebssystem,
- FIG 2: einen beispielhaften Verfahrensablauf,
- FIG 3: beispielhafte Parameter für den Identifikator,
- FIG 4: eine Änderung einer ID-Zuordnung.

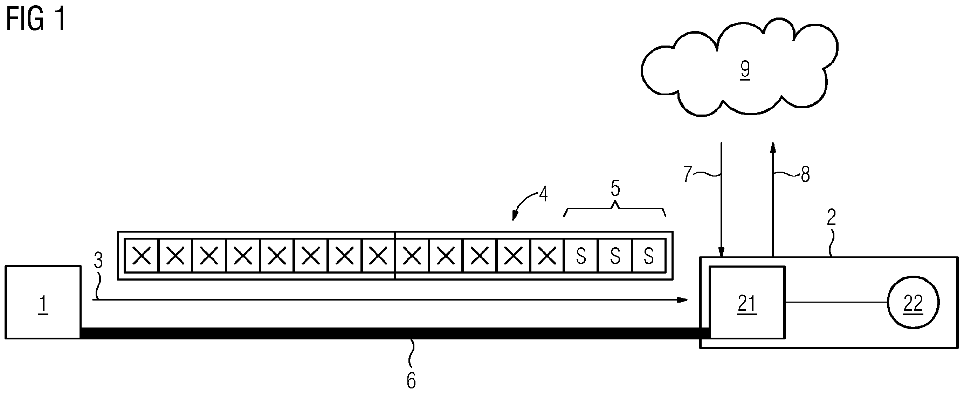

FIG 1 zeigt ein System, aufweisend eine Steuereinheit 1 und ein Antriebssystem 2. Die Steuereinheit 1 und das Antriebssystem 2 sind über ein System zur Datenübertragung, vorzugsweise über einen Bus 6, miteinander verbunden.

Das Antriebssystem 2 umfasst einen Umrichter 21 sowie eine dynamoelektrische Maschine 22. Die dynamoelektrische Maschine 22 ist vorzugsweise eine dynamoelektrische rotatorische Maschine, insbesondere ein Motor. Jedoch ist auch ein Linearmotor in der gezeigten Anordnung möglich.

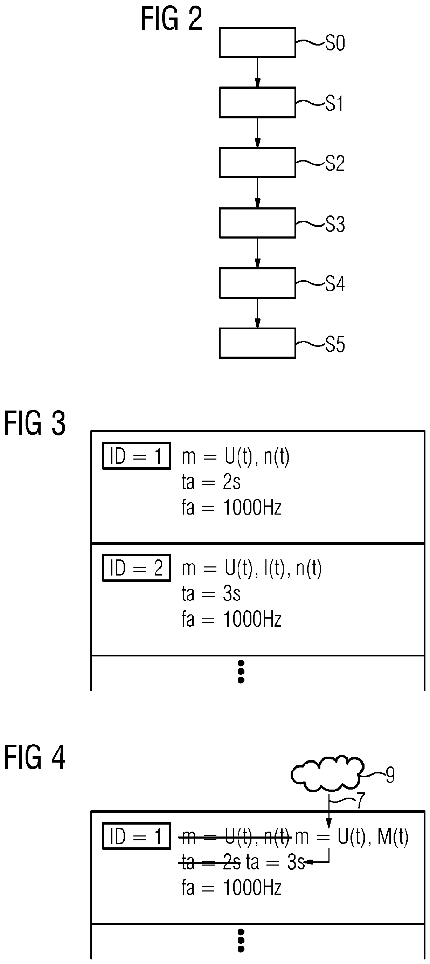

Das System ermöglicht eine Durchführung eines in FIG 2 gezeigten Verfahrens.

Die Steuereinheit 1 ist vorzugsweise ein Programmable Logic Controller (kurz: PLC) oder eine andere Einheit zur Steuerung von Bewegungen. Die Steuereinheit 1 generiert u. a. Drehzahl- und/oder Lagesollwerte und/oder fügt situationsbezogene Identifikatoren (auch: Situationsidentifier) ein.

Der Situationsidentifier wird vorteilhaft in ein Telegramm 4 an das Antriebssystem 2 zu einem Zeitpunkt eingefügt, an dem ein Vorgang beginnt, der für eine spätere, messtechnische Auswertung interessant erscheint. Da mehrere, verschiedene Vorgänge interessant sein können, enthält der Identifikator vorzugsweise eine Nummer, durch welche die verschiedenen Vorgänge unterschieden werden können.

An welchen Stellen im Prozessablauf ein bestimmter Identifikator eingefügt wird, entscheidet z. B. ein Programmierer der PLC oder ein Ersteller eines Teileprogramms einer Werkzeugmaschine.

Was bei Auftreten eines bestimmten Identifikators im Antrieb passiert, wird z.B. bei der Inbetriebnahme des Antriebssystem 2 oder nach der Inbetriebnahme aus einer Cloud 9 heraus definiert.

Der Umrichter 21 umfasst vorteilhaft eine Antriebs-Regelung sowie eine Steuerung einer situationsbezogenen Messdatenaufzeichnung.

Eine Datenkommunikation zwischen der Steuereinheit 1 und dem Antriebssystem 2 gelingt vorzugsweise durch den Bus 6. Mittels eines Telegramms 4 werden Daten übertragen.

Das Telegramm 4 umfasst in der Figur zwei Byte. Es sind auch andere Telegrammlängen denkbar. Das Telegramm 4 umfasst wenigstens eine Anweisung, vorzugsweise eine Mehrzahl an Anweisungen, wobei das Telegramm wenigstens eine Anweisung zur Aufzeichnung umfasst, wobei durch die Anweisung zur Aufzeichnung eine Aufzeichnung von wenigstens einem Ist-Wert, vorzugsweise von einer Mehrzahl an Ist-Werten, und/oder einer Ist-Wert-Abfolge, vorzugsweise einer Mehrzahl an Ist-Wert-Abfolgen, des Antriebssystems veranlasst wird.

Ein Ist-Wert ist beispielsweise ein Wert zu einem Zeitpunkt. Ein Ist-Wert kann z. B. auch ein gemittelter Wert über einen kurzen Zeitraum sein.

Eine Ist-Wert-Abfolge ist vorteilhaft eine Mehrzahl an Werten, insbesondere unterschiedlichen Werten, während einer Aufzeichnungsdauer.

Die Anweisung zur Aufzeichnung ist vorteilhaft ein Steuerwort 5.

Das Telegramm 4 enthält vorteilhaft zudem eine Anweisung zum Verhalten des Antriebssystems, beispielsweise zum Beginn eines definierten Arbeitszyklus.

Die Anweisung zur Aufzeichnung umfasst vorzugsweise einen Identifikator (ID).

Bei Auftreten einer bestimmten ID wird eine der ID zugehörige Messfunktion ausgeführt. Die ID bestimmt, welche Ist-Werte (z. B. Strom, Drehzahl, Temperatur) aufgezeichnet werden sowie die Aufzeichnungsdauer und die Abtastrate der Aufzeichnung. Beispielsweise werden aus einer Liste diejenigen aufzuzeichnenden Ist-Werte ausgewählt, die mit der ID verknüpft sind. Analog werden Aufzeichnungsdauer und Abtastrate ausgewählt.

Die Cloud 9 stellt vorteilhaft eine Funktion zur Projektierung der situationsbezogenen Messdaten-Aufzeichnung bereit. Ferner stellt die Cloud 9 vorteilhaft einen Datenspeicher zur Speicherung der aufgezeichneten Messdaten bereit. Die Cloud 9 stellt überdies vorteilhaft eine Funktion zur Messdaten-Auswertung für Predictive Maintenance bereit.

Dem Identifikator wird vorteilhaft, vorzugsweise ferngesteuert, insbesondere mittels Cloud-Computing, im laufenden Betrieb des Antriebssystems die definierte Abtastrate und/oder die definierte Aufzeichnungsdauer zugeordnet. Dies ist durch einen Pfeil 7 dargestellt, welcher von der Cloud 9 zum Antriebssystem 2 zeigt.

Nach Aufzeichnung des Ist-Werts wird vorteilhaft ein aufgezeichneter Ist-Wert und/oder nach Aufzeichnung der Ist-Wert-Abfolge eine aufgezeichnete Ist-Wert-Abfolge, insbesondere mittels Cloud-Computing, abgespeichert. Dies ist durch einen Pfeil 8 dargestellt, welcher vom Antriebssystem 2 in Richtung der Cloud 9 zeigt.

FIG 2 zeigt einen beispielhaften Verfahrensablauf.

In einem optionalen Verfahrensschritt S0 erfolgt eine Vorgabe einer Messwertdefiniton zur ID. Dies gelingt vorteilhaft ferngesteuert, insbesondere mittels Cloud-Computing. Jedoch ist auch eine andere, z. B. lokale, Parametrierung möglich.

Die Messwertdefiniton ist vorteilhaft vor Absendung des Telegramms definiert.

In einem Verfahrensschritt S1 wird das Telegramm übersandt. Das Telegramm enthält vorzugsweise mehrere Anweisungen. Durch das Telegramm wird dem Antriebssystem vorteilhaft signalisiert, dass ein bestimmter Arbeitszyklus gestartet werden soll sowie bestimmte Messwerte ermittelt werden sollen.

In einem Verfahrensschritt S2 beginnt der Arbeitszyklus.

Gleichzeit oder zeitversetzt zu S2 erfolgt in einem Verfahrensschritt S3 die Aufzeichnung des Ist-Werts bzw. der Ist-Werte und/oder der Ist-Wert-Abfolge bzw. der Ist-Wert- Abfolgen.

In einem Verfahrensschritt S4 erfolgt ein Abspeichern, insbesondere mittels Cloud-Computing.

In einem Verfahrensschritt S5 erfolgt eine Analyse der abgespeicherten Werte. Beispielsweise werden, vorzugsweise mittels Cloud-Computing, Werte aus verschiedenen Messreihen verglichen, um Rückschlüsse auf Verschleiß oder Beschädigungen ziehen und Wartungsarbeiten planen zu können.

Ungeplante Stillstände von Maschinen, Antrieben und Anlagen können somit vermieden werden, da Probleme frühzeitig erkannt werden.

FIG 3 zeigt beispielhafte Parameter für den Identifikator ID. Aufzuzeichnende Werte m können sein: Spannung U (abhängig von einer Zeit t), Drehzahl n, Strom I und Drehmoment M. Weitere aufzuzeichnende Werte können sein: Position, Drehzahl-Abweichung, Positions-Abweichung, Fehlermeldungen, Auslastung, Netzspannung, Zwischenkreisspannung, digitale Eingänge, Temperaturen, z. B. Motor-Temperatur und/oder Transistor-Temperatur und/oder Umgebungs-Temperatur etc.

Der Identifikator ID stellt nur vorteilhaft ein Triggersignal mit einer Kennung dar. Die Zuordnung der Messsignale erfolgt im Antriebssystem 2 oder aus der Cloud 9.

Es sind zudem eine Aufzeichnungsdauer ta sowie eine Abtastrate fa gezeigt.

FIG 4 zeigt eine Änderung einer ID-Zuordnung.

Dem Identifikator ID wird vorteilhaft, vorzugsweise ferngesteuert, insbesondere mittels Cloud-Computing, im laufenden Betrieb des Antriebssystems der definierte Ist-Wert und/oder die definierte Ist-Wert-Abfolge zugeordnet.

Dem Identifikator ID wird vorteilhaft, vorzugsweise ferngesteuert, insbesondere mittels Cloud-Computing, im laufenden Betrieb des Antriebssystems die definierte Abtastrate und/oder die definierte Aufzeichnungsdauer zugeordnet.

Die Figur zeigt, dass mittels der Cloud 9 die aufzuzeichnenden Werte m sowie die Aufzeichnungsdauer ta geändert werden.

Die Änderung kann durch die Cloud 9 im laufenden Betrieb getätigt werden.

Die Erfindung eignet sich z. B., um eine Genauigkeit von Werkzeugmaschinen zu erfassen bzw. eine Veränderung dieser.

## Patentansprüche

1. Verfahren zur Datenkommunikation zwischen einer Steuereinheit (1) und einem Antriebssystem (2), wobei die Steuereinheit (1) und das Antriebssystem (2), vorzugsweise über einen Bus (6), derart miteinander verbunden sind, dass mittels eines Telegramms (4) Daten übertragen werden, wobei das Telegramm (4) wenigstens eine Anweisung umfasst, vorzugsweise eine Mehrzahl an Anweisungen, wobei das Telegramm (4) wenigstens eine Anweisung zur Aufzeichnung (5) umfasst, wobei durch die Anweisung zur Aufzeichnung (5) eine Aufzeichnung von wenigstens einem Ist-Wert, vorzugsweise von einer Mehrzahl an Ist-Werten, und/oder einer Ist-Wert-Abfolge, vorzugsweise einer Mehrzahl an Ist-Wert-Abfolgen, des Antriebssystems (2) veranlasst wird,
**dadurch gekennzeichnet, dass**
die Anweisung zur Aufzeichnung (5) einen Identifikator (ID) umfasst,
wobei durch den Identifikator (ID) eine Aufzeichnung wenigstens eines definierten Ist-Werts aus einer Mehrzahl an Ist-Werten und/oder eine Aufzeichnung wenigstens einer definierten Ist-Wert-Abfolge aus einer Mehrzahl an Ist-Wert-Abfolgen veranlasst wird.

2. Verfahren nach Anspruch 1, wobei das Telegramm (4) zu vorbestimmten oder vorbestimmbaren Zeitpunkten abgesetzt wird.

3. Verfahren nach einem der vorhergehenden Ansprüche, wobei die Anweisung ein Steuerwort ist.

4. Verfahren nach einem der vorhergehenden Ansprüche, wobei das Telegramm (4) eine Anweisung zum Verhalten des Antriebssystems (2) aufweist.

5. Verfahren nach einem der vorhergehenden Ansprüche, wobei durch den Identifikator (ID) eine definierte Abtastrate der Aufzeichnung aus einer Mehrzahl an Abtastraten und/oder eine definierte Aufzeichnungsdauer aus einer Mehrzahl an Aufzeichnungsdauern veranlasst wird.

6. Verfahren nach einem der vorhergehenden Ansprüche, wobei dem Identifikator (ID), vorzugsweise ferngesteuert, insbesondere mittels Cloud-Computing, im laufenden Betrieb des Antriebssystems (2) der definierte Ist-Wert und/oder die definierte Ist-Wert-Abfolge zugeordnet wird.

7. Verfahren nach einem der vorhergehenden Ansprüche, wobei dem Identifikator (ID), vorzugsweise ferngesteuert, insbesondere mittels Cloud-Computing, im laufenden Betrieb des Antriebssystems (2) die definierte Abtastrate und/oder die definierte Aufzeichnungsdauer zugeordnet wird.

8. Verfahren nach einem der vorhergehenden Ansprüche, wobei nach Aufzeichnung des Ist-Werts ein aufgezeichneter Ist-Wert und/oder nach Aufzeichnung der Ist-Wert-Abfolge eine aufgezeichnete Ist-Wert-Abfolge, insbesondere mittels Cloud-Computing, abgespeichert wird.

9. Verfahren nach einem der vorhergehenden Ansprüche, wobei der Identifikator (ID), insbesondere mittels Cloud-Computing, abgespeichert wird.

10. Verfahren nach einem der Ansprüche 8 oder 9, wobei der aufgezeichnete Ist-Wert und/oder die aufgezeichnete Ist-Wert-Abfolge mit einem weiteren aufgezeichneten Ist-Wert einer weiteren Aufzeichnung und/oder einer weiteren aufgezeichneten Ist-Wert-Abfolge der weiteren Aufzeichnung verglichen wird.

11. System zur Durchführung eines Verfahrens nach einem der Ansprüche 1 bis 10, aufweisend:
- eine Steuereinheit (1) und
- ein Antriebssystem (2), wobei die Steuereinheit (1) und das Antriebssystem (2) über ein System zur Datenübertragung, vorzugsweise über einen Bus (6), miteinander verbunden sind.

## Claims

1. Method for data communication between a control unit (1) and a drive system (2), wherein the control unit (1) and the drive system (2) are connected to one another, preferably via a bus (6), in such a way that data is transmitted by means of a telegram (4), wherein the telegram (4) comprises at least one instruction, preferably a plurality of instructions, wherein the telegram (4) comprises at least one instruction for recording (5), wherein through the instruction for recording (5) a recording of at least one actual value, preferably of a plurality of actual values, and/or of an actual value sequence, preferably of a plurality of actual value sequences, of the drive system (2) is caused,
**characterised in that**
the instruction for recording (5) comprises an identifier (ID),
wherein through the identifier (ID) a recording of at least one defined actual value from a plurality of actual values and/or a recording of at least one defined actual value sequence from a plurality of actual value sequences is caused.

2. Method according to claim 1, wherein the telegram (4) is distributed at predetermined or predeterminable points in time.

3. Method according to one of the preceding claims, wherein the instruction is a control word.

4. Method according to one of the preceding claims, wherein the telegram (4) has an instruction about the behaviour of the drive system (2).

5. Method according to one of the preceding claims, wherein through the identifier (ID) a defined sampling rate of the recording from a plurality of sampling rates and/or a defined recording duration from a plurality of recording durations is caused.

6. Method according to one of the preceding claims, wherein the defined actual value and/or the defined actual value sequence are assigned to the identifier (ID), preferably under remote control, in particular by means of cloud computing, during ongoing operation of the drive system (2).

7. Method according to one of the preceding claims, wherein the defined sampling rate and/or the defined recording duration are assigned to the identifier (ID), preferably under remote control, in particular by means of cloud computing, during ongoing operation of the drive system (2).

8. Method according to one of the preceding claims, wherein after recording of the actual value a recorded actual value and/or after recording of the actual value sequence a recorded actual value sequence is stored, in particular by means of cloud computing.

9. Method according to one of the preceding claims, wherein the identifier (ID) is stored, in particular by means of cloud computing.

10. Method according to one of claims 8 or 9, wherein the recorded actual value and/or the recorded actual value sequence is compared with a further actual value of a further recording and/or of a further recorded actual value sequence of the further recording.

11. System for carrying out a method according to one of claims 1 to 10, having:
- a control unit (1) and
- a drive system (2), wherein the control unit (1) and the drive system (2) are connected to one another via a system for data transmission, preferably via a bus (6).

## Revendications

1. Procédé de communication de données entre une unité (1) de commande et un système (2) d'entraînement, dans lequel l'unité (1) de commande et le système (2) d'entraînement sont reliés entre eux, de préférence par un bus (6), de manière à transmettre des données au moyen d'un télégramme (4), dans lequel le télégramme (4) comprend au moins une instruction, de préférence une pluralité d'instructions, dans lequel le télégramme (4) comprend au moins une instruction d'enregistrement (5), dans lequel, par l'instruction d'enregistrement (5), on provoque un enregistrement d'au moins une valeur réelle, de préférence d'une pluralité de valeurs réelles, et/ou d'une séquence de valeurs réelles, de préférence d'une pluralité de séquences de valeurs réelles du système (2) d'entraînement,
**caractérisé en ce que**
l'instruction d'enregistrement (5) comprend un identifiant (ID),
dans lequel, par l'identifiant (ID), on provoque un enregistrement d'au moins une valeur réelle définie parmi un pluralité de valeurs réelles et/ou un enregistrement d'au moins une séquence de valeurs réelles définie parmi une pluralité de séquences de valeurs réelles.

2. Procédé suivant la revendication 1, dans lequel on émet le télégramme (4) à des instants déterminés à l'avance ou pouvant l'être.

3. Procédé suivant l'une des revendications précédentes, dans lequel l'instruction est un mot de commande.

4. Procédé suivant l'une des revendications précédentes, dans lequel le télégramme (4) a une instruction pour le comportement du système (2) d'entraînement.

5. Procédé suivant l'une des revendications précédentes, dans lequel, par l'identifiant (ID), on provoque un taux de balayage défini de l'enregistrement parmi une pluralité de taux de balayage et/ou une durée d'enregistrement définie parmi une pluralité de durées d'enregistrement.

6. Procédé suivant l'une des revendications précédentes, dans lequel on affecte à l'identifiant (ID) la valeur réelle définie et/ou la séquence de valeurs réelles définie, de préférence de manière télécommandée, en particulier au moyen d'un cloud computing, dans le fonctionnement courant du système (2) d'entraînement.

7. Procédé suivant l'une des revendications précédentes, dans lequel on affecte le taux de balayage défini et/ou la durée d'enregistrement définie à l'identifiant (ID), de préférence de manière télécommandée, en particulier au moyen du cloud computing, dans le fonctionnement courant du système (2) d'entraînement.

8. Procédé suivant l'une des revendications précédentes, dans lequel, après l'enregistrement de la valeur réelle, on met en mémoire une valeur réelle enregistrée et/ou, après l'enregistrement de la séquence de valeurs réelles, on met en mémoire une séquence de valeurs réelles enregistrée, en particulier au moyen du cloud computing.

9. Procédé suivant l'une des revendications précédentes, dans lequel on met en mémoire l'identifiant (ID), en particulier au moyen du cloud computing.

10. Procédé suivant l'une des revendications 8 ou 9, dans lequel on compare la valeur réelle enregistrée et/ou la séquence de valeurs réelles enregistrée à une autre valeur réelle enregistrée d'un autre enregistrement et/ou à une autre séquence de valeurs réelles enregistrée de l'autre enregistrement.

11. Système pour effectuer un procédé suivant l'une des revendications 1 à 10, comportant :
- une unité (1) de commande,
- un système (2) d'entraînement, dans lequel l'unité (1) de commande et le système (2) d'entraînement sont reliés entre eux par un système de transmission de données, de préférence par un bus (6).
